Europäisches Patentamt

European Patent Office

Office européen des brevets

(19)

(11) Veröffentlichungsnummer : **0 003 244**
**B2**

(12) **NEUE EUROPÄISCHE PATENTSCHRIFT**

(45) Veröffentlichungstag der neuen Patentschrift :
21.11.85

(51) Int. Cl.⁴ : **B 23 Q   3/06**

(21) Anmeldenummer : **78200382.6**

(22) Anmeldetag : **20.12.78**

(54) Anordnung zum Bestimmen von Werkstücken.

(30) Priorität : **23.01.78 DE 2802791**

(43) Veröffentlichungstag der Anmeldung :
**08.08.79 Patentblatt 79/16**

(45) Bekanntmachung des Hinweises auf die Patenterteilung : **17.03.82 Patentblatt 82/11**

(45) Bekanntmachung des Hinweises auf die Entscheidung über den Einspruch : **21.11.85 Patentblatt 85/47**

(84) Benannte Vertragsstaaten :
**BE CH DE FR GB IT NL SE**

(56) Entgegenhaltungen :
DD-C-   103 836
DD-C-   121 295
DE-A- 1 703 101
DE-A- 1 903 576
DE-C- 1 241 202
GB-A-   173 712
GB-A-   280 224
GB-A-   583 756
GB-A-   689 906
GB-A-   910 717
GB-A- 1 135 922
SE-A-    47 557
SE-A-   503 871
US-A- 1 788 652
US-A- 2 325 387
US-A- 2 547 211
US-A- 2 593 538
US-A- 2 619 010
US-A- 2 828 589
US-A- 3 181 858

(73) Patentinhaber : **Niedecker, Herbert, Dipl.-Ing.**
**Am Ellerhang 6**
**D-6240 Königstein 2 (DE)**

(72) Erfinder : **Niedecker, Herbert, Dipl.-Ing.**
**Am Ellerhang 6**
**D-6240 Königstein 2 (DE)**

(74) Vertreter : **Fischer, Ernst, Dr. et al**
**Reuterweg 14**
**D-6000 Frankfurt am Main 1 (DE)**

(56) Entgegenhaltungen :
"Werkstückspanner(vorrichtung)" K. Schreyer, 1969, Springer Verlag, Berlin
"Berechnung und Konstruktion von Vorrichtungen", 5. Auflage, VEB, Verlag Technik
"Bauelemente der Feinmechanik" von Richter-Voss, zweite Auflage, 1938, Seite 252, Abb. 1091
Werkstattstechnik-Zeitschrift industrielle Fertigung, S. 611
DIN Normblatt 6332/1968
DIN Normblatt 6319/1963
Der Vorrichtungsbau, 3. Auflage, Verlag Julius Springer, S. 30-33
Broschüre "Kuitopp Clamping Screw" der Svenska Bonab AB

EP 0 003 244 B2

## Beschreibung

Die Erfindung bezieht sich auf eine Anordnung zum Bestimmen von Werkstücken zu deren Bearbeitung, bestehend für die erste Ebene aus drei Bestimmelementen, deren Berührungskörper je eine sphärische Abstützfläche aufweisen und innerhalb eines begrenzten Winkelbereichs allseits schwenkbar sind.

Rohlinge, aus denen durch Bearbeitung fertige Werkstücke, z. B. Maschinen- oder Flugzeugteile, hergestellt werden, müssen zur Bearbeitung in die räumlich richtige Bearbeitungslage gebracht werden, damit sie für die Bearbeitungswerkzeuge entsprechend zugänglich sind. Die Bearbeitungslage des Werkstücks kann in bis zu drei Ebenen, entsprechend den Raumkoordinaten X, Y, Z zu den Achsen der Werkzeugmaschine bestimmt werden (vgl. Schreyer, Werkstückspanner, 1969, S. 20 ff).

Das besonders wesentliche Bestimmen in der ersten Ebene erfolgt durch Auflage des Werkstücks auf die eingangs genannten drei Bestimmelemente, weil eine Ebene im Raum durch drei Punkte eindeutig definiert wird. Das Bestimmen in der zweiten Ebene erfolgt durch zwei weitere Anschläge, das Bestimmen in der dritten Ebene durch einen weiteren Anschlag. Weitere Auflagen oder Anschläge können der Stützung des Werkstücks dienen, jedoch nicht dem Bestimmen der Bearbeitungslage.

Obwohl die Bestimmebenen durch « Punkte » definiert werden, scheidet beim Bestimmen eine im Wortsinne punktförmige Berührung zwischen dem Werkstück und den Bestimmelementen aus, weil entsprechend nadelartig ausgebildete Bestimmelemente dem Auflagedruck und insbesondere dem anschliessenden Spanndruck (durch den die Bestimmlage nicht verändert werden darf) nicht standhalten könnten.

In der Praxis hat man daher flächige Auflagen vorgesehen, die jedoch oft eine Vorbearbeitung der Auflageflächen am Rohling erforderlich machten oder wegen der Unebenheiten auf dem Rohling beim anschließenden Spannen oft ein unerwünschtes Verspannen zur Folge hatten, was nach der Bearbeitung zu einem fehlerhaften Werkstück führte. Selbst bei vorbearbeiteten Auflageflächen war ein Spannen, ohne daß das Werkstück dabei verspannt wurde, nicht immer sichergestellt.

Bei der eingangs angegebenen, aus der DD-A 121 295 bekannten Anordnung hat der Berührungskörper jedes der drei Bestimmelemente drei Nocken, die am Werkstück zur Anlage kommen und so die Auflageebene am jeweiligen Bestimmelement definieren. Dem liegt die Vorstellung zugrunde, daß die — in bezug auf die Gesamtanordnung und die Bestimmlage des Werkstücks partielle — Auflageebene bei unebener, insbesondere gußrauher Werkstück-Oberfläche nur durch gewissermaßen punktförmige Berührung zutreffend « bestimmt » werden kann. Dies entspricht herkömmlicher technischer Überzeugung und Übung ; vgl. « Der Vorrichtungsbau » (Springer 1939), S. 31 Abs. 1 und Abb. 141.

Tatsächlich hat jedoch die Dreinockenauflage (an jedem der drei gemeinsam die Bestimmebene definierenden Bestimmelemente) gravierende Nachteile. Es besteht nämlich die erhebliche Gefahr, daß mindestens ein Nocken der Dreinockenauflage abkippt, weil er aufgrund einer groben Oberflächenungenauigkeit oder einer lokal verringerten Festigkeit des Werkstücks in dieses eindringt, oder daß er über die Kante des Werkstücks hinaus bzw. in einen abgerundeten Kantenbereich gerät und abkippt, zumal wegen der notwendigen Zugänglichkeit des Werkstücks für Bearbeitungsvorgänge die Bestimmpunkte so weit wie möglich an den Werkstücksrand gelegt werden. Außerdem hat die bei der DD-A 121 295 vorgesehene Ausbildung des Berührungskörpers als Zylinderabschnitt mit angeformter sphärischer Abstützfläche, die an einer Kegelfläche anliegt, den Nachteil hoher, zu Deformationen neigender Flächenpressung entlang dem linienförmigen Abstützbereich. Überdies wandert dieser Berührungskörper bei Schwenkbewegungen seitlich aus, was seine Abdichtung innerhalb des Bestimmelements beeinträchtigt.

Der Erfindung liegt die Aufgabe zugrunde, die bekannte Anordnung derart zu verbessern, daß die Genauigkeit des Bestimmens erhöht wird.

Die Lösung dieser Aufgabe besteht darin, daß die Berührungskörper abgeflachte, in Kugelpfannen beweglich gelagerte Kugeln sind, deren Berührungsflächen zur Anlage am Werkstück eben sind.

Die Kugelausbildung der Berührungskörper und deren Lagerung in Kugelpfannen sichert deren leichtgängige Beweglichkeit, wie dies bei Spanneinrichtungen an sich bekannt ist.

Entscheidend aber ist, daß die ebenen (universell beweglichen) Berührungsflächen der Bestimmelemente eine sehr viel höhere Bestimmgenauigkeit als die bekannten Dreinockenauflagen bieten. Das ist darauf zurückzuführen, daß die ebene Berührungsfläche die Unebenheiten des unbearbeiteten Werkstücks überbrückend ausgleicht. Solche Unebenheiten führen jetzt nicht mehr — ebenso wie Kanten oder Randneigungen — zum Abkippen eines Berührungskörpers und damit zum Wegrutschen des Bestimmpunktes aus der zu definierenden Soll-Ebene. Zugleich ist größtmögliche Gewähr dafür gegeben, daß beim anschließenden Aufbringen des Spanndrucks keine Veränderung der Bestimmlage des Werkstücks erfolgt, weil die Berührungsflächen der Bestimmelemente bei der erfindungsgemäßen Anordnung relativ groß sein können und sich daher auch beim Spannen die zwischen Werkstückoberfläche und Bestimmelement auftretenden Flächenpressungen in Grenzen halten.

Außerdem wird die Anordnung durch ihre Eignung zur Verwendung im Baukastensystem, insbesondere mit vorhandenen Grund- oder Rasterplatten, billiger.

Bei der erfindungsgemäßen Anordnung zum Bestimmen von Werkstücken können in Verbindung mit einer Anordnung zum Spannen des Werkstücks Spannelemente verwendet werden, die ebenfalls abgeflachte kugelförmige Elemente enthalten, die in Kugelpfannen beweglich gelagert sind. Damit sollen ebenfalls Verspannungen bei der Werkstückbearbeitung vermieden werden.

Eine besonders vorteilhafte Ausführungsform der erfindungsgemäßen Anordnung in Verbindung mit einer Anordnung zum Spannen ergibt sich dann, wenn die Bestimmelemente und die Spannelemente einander gegenüberliegend angeordnet sind. Diese Anordnung verhindert zusätzlich ein Verspannen des Werkstücks.

Gemäß der Erfindung ist es auch möglich, in Verbindung mit einer Anordnung zum Spannen neben den Bestimmelementen und den Spannelementen zusätzliche höhenverstellbare Stütz- und Spannelemente vorzusehen, die dann vorzugsweise wiederum einander gegenüberliegend angeordnet sind und die abgeflachte Kugeln enthalten, die in Kugelpfannen beweglich gelagert sind, wobei die Berührungsflächen der Elemente zur Anlage am Werkstück eben sind. Die Höhenverstellbarkeit ermöglicht eine Anpassung an die bestimmte Werkstücklage. Dies dient auch zur Vermeidung des Verspannens.

In weiterer Ausgestaltung der Erfindung ist vorgesehen, daß auch die Anschläge für das Bestimmen des Werkstücks in der zweiten und dritten Ebene abgeflachte Kugeln aufweisen, die in Kugelpfannen beweglich gelagert sind und die Berührungsflächen der Elemente zur Anlage am Werkstück eben sind. Auf diese Weise wird auch bei den Bestimmelementen für die zweite und dritte Ebene Gebrauch von dem Grundgedanken der Erfindung gemacht, durch die abgeflachten Kugeln ein Verspannen des Werkstücks beim Spannen nach dem Bestimmen zu vermeiden. Für das Bestimmen in der zweiten und dritten Ebene können auch herkömmliche Anschläge verwendet werden.

Nach einem anderen Merkmal der Erfindung können die Bestimmelemente für die zweite und dritte Ebene bereits in den Bestimmelementen für die erste Ebene eingebaut sein. Diese Bestimmelemente für die zweite und dritte Ebene weisen dann je einen Aufnahmestift für Bohrungen der Werkstücke auf und sind in die Bestimmelemente für die erste Ebene eingebaut. Hierdurch gelangt man wiederum zu einem Spannen des Werkstücks, ohne daß es verspannt wird. Darüber hinaus bedeutet diese erfindungsgemäße Ausbildung auch eine Kosteneinsparung aufgrund nicht erforderlicher zusätzlicher Bestimmelemente für die zweite und dritte Ebene.

Eine weitere Ausbildung der Erfindung liegt darin, daß die Bestimmelemente für die zweite und dritte Ebene je eine Schraube aufweisen, deren Schaft dem Bestimmen dient und hierzu durch eine Bohrung im Bestimmelement für die erste Ebene geführt ist. In Verbindung mit einer Anordnung zum Spannen dient der Kopf dem Spannen, wobei die Kopfunterseite kugelförmig ausgebildet ist und in einer Kugelpfanne sitzt, die eben an dem Werkstück anliegt. Bei einer derartigen Ausbildung der erfindungsgemäßen Anordnung sind also die Bestimmelemente für die zweite und dritte Ebene gleichzeitig als Spannelemente für das Werkstück ausgebildet.

Schließlich ist es auch möglich, daß der Kopf der Schraube im Werkstück versenkt ist. Wenn bestimmte Flächen des Werkstücks eine derartige Anordnung der Bestimm- und Spannelemente gestatten, so ergibt sich hierdurch eine ungehinderte Bearbeitungsmöglichkeit dieser Flächen.

In Verbindung mit den erfindungsgemäßen Bestimmelementen können auch die herkömmlichen Spannelemente, z. B. Spanneisen, verwendet werden, womit jedoch nicht immer alle Vorteile der erfindungsgemäßen Vorrichtung erreicht werden können.

Weitere Einzelheiten, Merkmale und Vorteile der Erfindung ergeben sich aus der folgenden Beschreibung mehrerer Ausführungsbeispiele anhand der Zeichnungen. Es zeigen :

Figur 1 ein Bestimmelement für die erste, zweite und dritte Ebene ;

Figur 2 den Gegenstand der Fig. 1, der gleichzeitig als Bestimmelement für die zweite und dritte Ebene ausgebildet ist ;

Figur 3 eine Abwandlung des Gegenstandes der Fig. 2, wobei das Bestimmelement in einem beweglichen Schieber sitzt ;

Figur 4 den Gegenstand der Fig. 1, wobei das Bestimmelement für die zweite und dritte Ebene gleichzeitig als Spannelement ausgebildet ist ;

Figur 5 den Gegenstand der Fig. 4 mit im Werkstück versenkt angeordnetem Kopf des Bestimm- und Spannelementes ;

Figur 6 Stütz- und Spannelement ;

Figur 7 die erfindungsgemäße Anordnung zum Bestimmen und Spannen eines Werkstücks, wobei das Spannelement eine abgeflachte Kugel aufweist ;

Figur 8 ein Bestimmelement mit herkömmlichem Spannelement ;

Figur 9 die erfindungsgemäße Anordnung, bestehend aus einem Bestimmelement zur Bestimmung der ersten Ebene und einem gegenüberliegend angeordneten Spannelement ;

Figur 10 die Anordnung der Fig. 9 in Draufsicht ;

Figur 11 eine Abwandlung der Anordnung gemäß Fig. 9 und 10, wobei das Bestimmelement für die erste Ebene mit einem Bestimmelement für die zweite und dritte Ebene versehen ist ;

Figur 12 eine Anordnung gemäß Fig. 11 mit einem Längsschieber ;

Figur 13 eine weitere Abwandlung der Anordnung gemäß Fig. 11, jedoch mit einem Querschieber ;

Figur 14 eine Draufsicht des Gegenstandes der Fig. 13 ;

Figur 15 eine Seitenansicht eines strichpunktiert dargestellten Werkstückes, das mit Anordnungen gemäß Fig. 9, 11 und 12 auf einer gemeinsamen Grundplatte bestimmt und gespannt ist ;

Figur 16 eine Draufsicht der Anordnung gemäß Fig. 15 ;

Figuren 17 und 18 zeigen ein Anordnungsbeispiel der erfindungsgemäßen Anordnungen in Vorderansicht und Draufsicht ;

Figur 19 zeigt einen Schnitt gemäß der Linie A-A der Draufsicht von Fig. 20, wobei die Bestimmelemente als zusätzliche Anschläge ausgebildet sind.

In der folgenden Beschreibung der Zeichnung sind gleiche oder gleichartige Teile in den verschiedenen Figuren mit gleichen Bezugszeichen versehen.

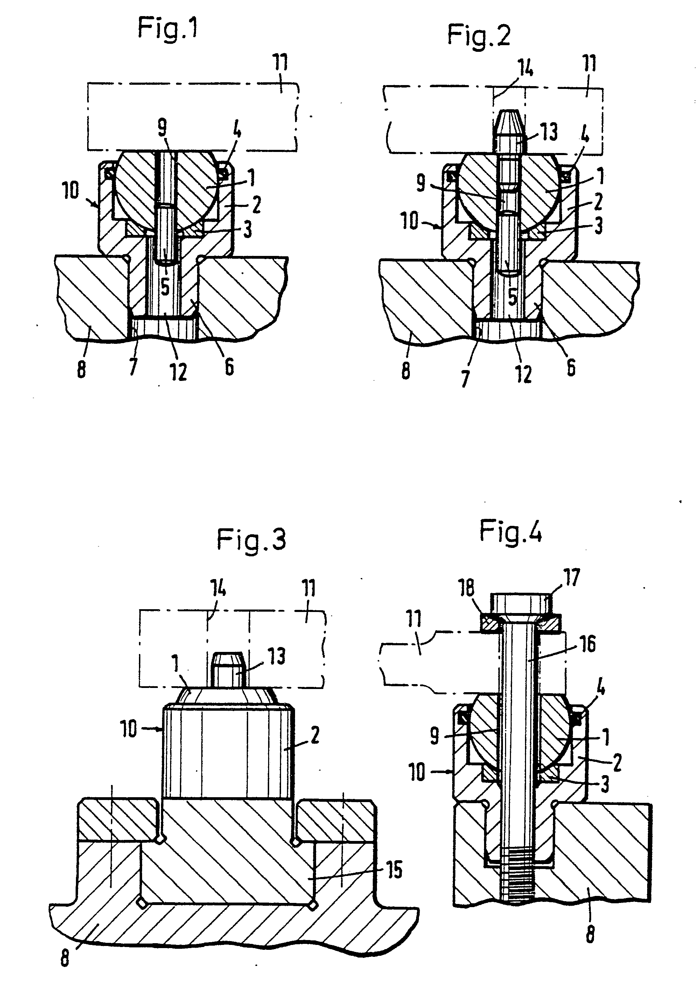

In Fig. 1 ist ein insgesamt mit (10) bezeichnetes Bestimmelement der erfindungsgemäßen Anordnung gezeigt. Es besteht aus einer abgeflachten Kugel (1), wobei die Abflachung zur Anlage am Werkstück (11) dient. Die Kugel (1) ist in einem Gehäuse (2) in bestimmten Grenzen drehbar vorgesehen. Bei ihrer Drehung gleitet die Kugel (1) in einer Kugelpfanne (3), die ebenfalls im Gehäuse (2) angeordnet ist. Letzteres weist einen Ansatz (6) auf, mit dem das Bestimmelement (10) in eine Bohrung (7) einer Fußplatte (8) der erfindungsgemäßen Anordnung eingesetzt ist. Um ein zu starkes Verdrehen der Kugel (1) im Gehäuse (2) zu verhindern, ist in eine Bohrung (9) der Kugel ein Stift (5) eingepreßt, der in eine größere Bohrung (12) des Ansatzes (6) hineinragt, wodurch eine begrenzte Drehung der Kugel (1) in dem Gehäuse (2) möglich ist.

Um ein Verschmutzen der Lagerung der Kugel (1) im Gehäuse (2) zu verhindern und mithin deren Leichtgängigkeit sicherzustellen, ist am oberen Rand des Gehäuses (2) eine Dichtung (4), beispielsweise ein Rundschnurring angeordnet.

Die Drehbarkeit der Kugel (1) im Gehäuse (2) ermöglicht eine Anlage der Kugel (1) mit ihrem abgeflachten Teil am Werkstück (11) und mithin bei Vorhandensein der erforderlichen drei Bestimmelemente (10) ein genaues Bestimmen des Werkstücks (11), ohne daß dessen Auflageflächen am abgeflachten Teil der Kugel (1) einer besonderen Vorbearbeitung bedürften.

In den folgenden Figuren sind die Bestimmelemente (10) in gleicher Weise aufgebaut wie vorstehend bei Fig. 1 beschrieben. Zur Vermeidung von Wiederholungen wird im folgenden nurmehr auf die Unterschiede der weiteren Figuren gegenüber Fig. 1 eingegangen.

In Fig. 2 ist das Bestimmelement (10) gemäß Fig. 1 zusätzlich mit einem Aufnahmestift (13) versehen, der in die Bohrung (9) eingepreßt ist, die auch den Stift (5) aufnimmt. Mit dem Aufnahmestift (13) kann eine Bohrung (14) des Werkstücks (11) abgesteckt werden. Zum Bestimmen des Werkstücks (11) in der zweiten und dritten Ebene können zwei der insgesamt drei Bestimmelemente (10) zur Bestimmung der ersten Ebene mit den Aufnahmestiften (13) versehen sein.

Zum Ausgleich der Abstandsungenauigkeiten der Absteckbohrungen (14) im Werkstück (11) ist in Fig. 3 eines der beiden mit einem Aufnahmestift (13) versehenen Bestimmelemente (10) in einem Längs- oder Querschieber (15) der Fußplatte (8) gelagert.

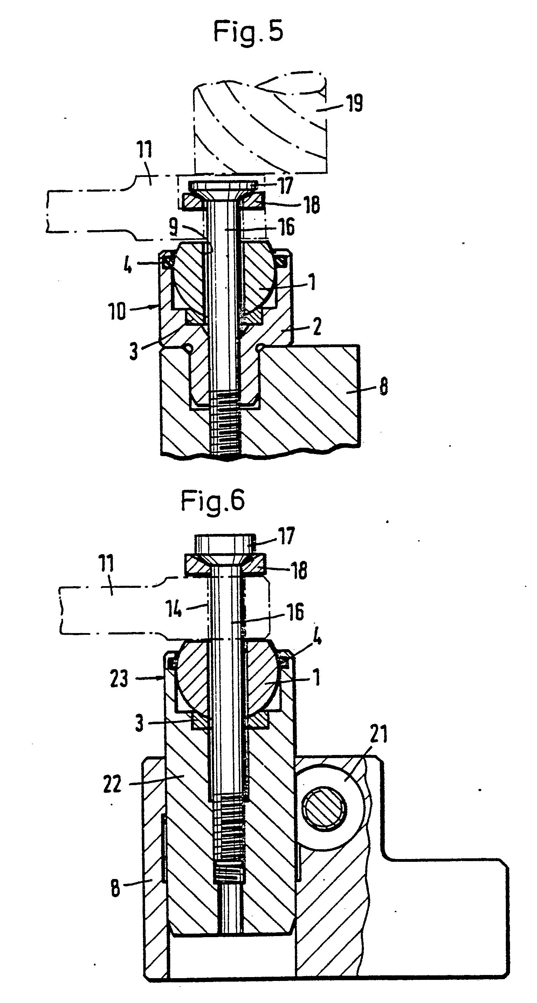

Fig. 4 und 5 zeigen eine Abwandlung des Bestimmens der zweiten und dritten Ebene nach den Fig. 2 und 3, wobei im vorliegenden Fall das Bestimmen mittels einer Schraube (16) anstelle des Aufnahmestiftes (13) erfolgt. Die Schraube (16) weist einen kleineren Durchmesser auf als die Bohrung (9) in der Kugel (1) so daß sich die Kugel (1) begrenzt um die Schraube (16) drehen läßt. Die Schraube (16) sitzt mit einem Gleitsitz im Gehäuse (2). In der Fußplatte (8) ist das Gewinde für die Schraube (16) vorgesehen. Auch hierbei können zum Ausgleich der Abstandsungenauigkeiten der Absteckbohrungen im Werkstück (11) längs- oder Querschieber verwendet werden.

Der Schraubenkopf (17) der Schraube (16) ist an seiner dem Werkstück gegenüberliegenden Anlagefläche kugelförmig ausgebildet, so daß er in einer Kugelpfanne (18) abrollen kann.

Fig. 5 zeigt die versenkte Anordnung des Schraubenkopfes (17) im Werkstück (11), damit ein Bearbeitungswerkzeug (19), beispielsweise ein Fräser, nicht durch den Schraubenkopf (17) behindert wird.

Fig. 6 zeigt ein höhenverstellbares Stütz- und Spannelement in der Ausführung nach Fig. 4 bzw. 5. Das Gehäuse (22) ist hierbei höhenverschiebbar in einem Fußstück (8) angeordnet. Über ein Klemmstück (8) kann das Gehäuse (22) und mithin der am Werkstück anliegende abgeflachte Teil der Kugel (1) der Höhe nach festgelegt werden. Das Spannelement wird durch die Schraube (16) mit Schraubenkopf (17) dargestellt, der in seiner dem Werkstück (11) gegenüberliegenden Anlagefläche kugelförmig ausgebildet ist, so daß er in einer Kugelpfanne (18) abrollen kann.

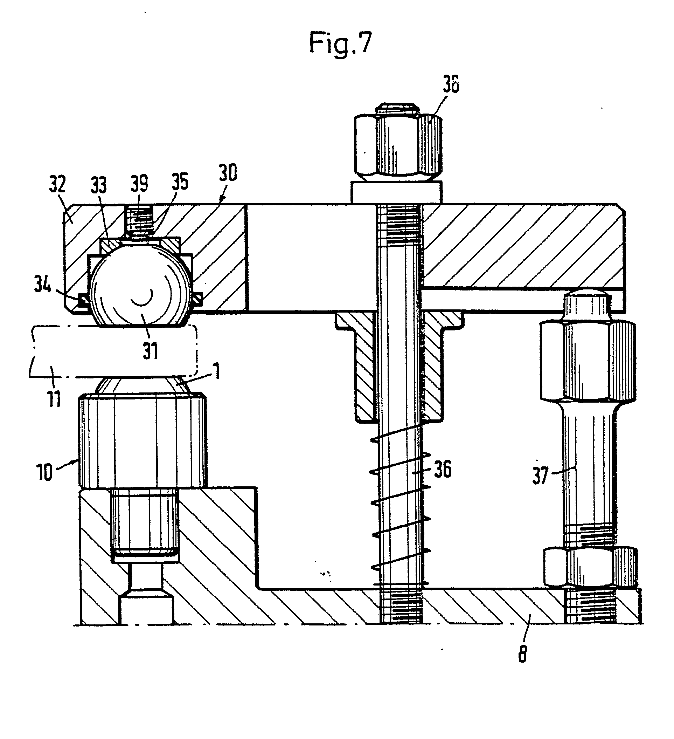

In der Fig. 7 ist die erfindungsgemäße Anordnung mit dem Bestimmelement (10) sowie einem Spannelement (30) dargestellt. Das Spannelement (30) weist eine abgeflachte Kugel (31) auf, die in einem Gehäuse eines Spanneisens (32) mit Kugelpfanne (33) angeordnet ist. Zwischen dem kugelförmigen Element (31) und Gehäuse (32) ist eine Dichtung (34) vorgesehen. Bei dem Spannelement (30) ist zur Beschränkung dessen Kippbarkeit eine Madenschraube (39) in dem Gehäuse (32) angeordnet, die mit einem weiteren abgeflachten Teil (35) der Kugel (31) zusammenwirkt. Erfolgt eine zu starke Neigung der Kugel (31), so stößt ihr nicht abgeflachter Teil mit der Madenschraube (39) zusammen und verhindert dann ein weiteres Verdrehen. Ebenso wie die Kugel 1 des Bestimmelementes (10) weist das kugelförmige Element (31) einen abgeflachten Teil auf, mit dem es am Werkstück (11) anliegt.

Ein Stehbolzen (36) ist in der Fußplatte (8) einschraubt ; ebenso ein Gegenlager (37), das auch als hydraulischer Kolben ausgeführt sein kann. Das Spannen des Werkstücks (11) erfolgt nach dem Bestimmen durch Festziehen der Mutter (38).

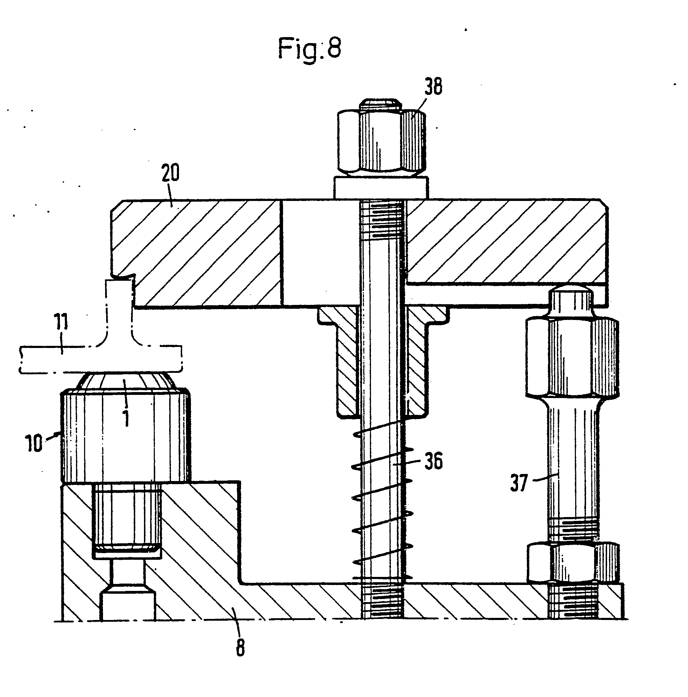

In Fig. 8 erfolgt das Spannen des Werkstücks (11) in herkömmlicher Weise mit einem Spanneisen (20).

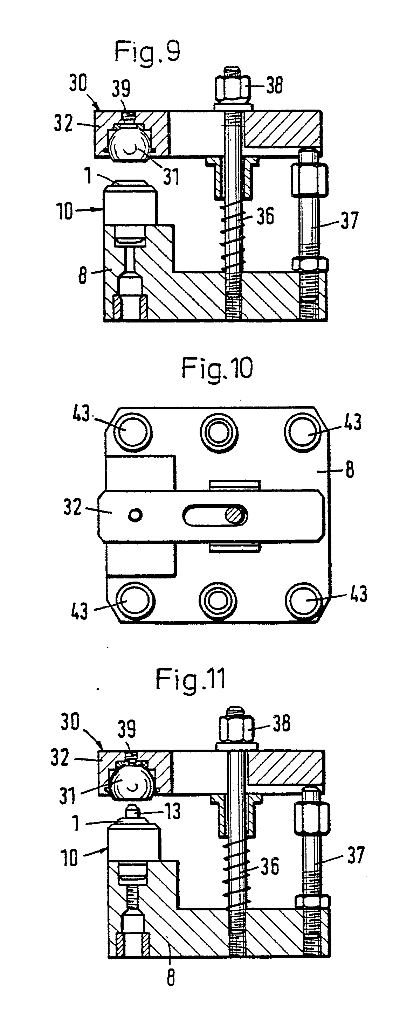

In den Fig. 9 bis 14 sind die in den Fig. 1, 2, 3 und 7 gezeigten Bestimmelemente und Spannelemente zu einer Anordnung zusammengebaut dargestellt.

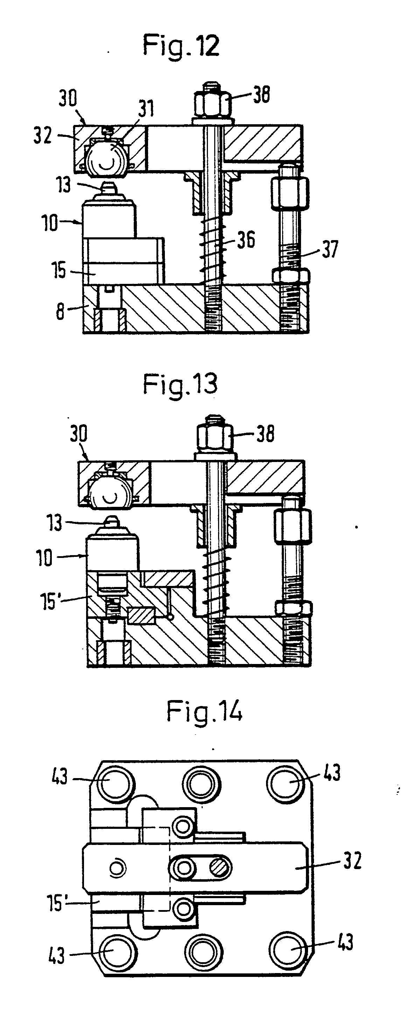

Fig. 9 und 10 zeigen eine zusammengebaute Anordnung gemäß Fig. 1 und 7, Fig. 11 zeigt eine zusammengebaute Anordnung gemäß Fig. 2 und 7, Fig. 12 zeigt eine zusammengebaute Anordnung gemäß Fig. 3 und 7, wobei das Bestimmelement (10) in einem Längsschieber (15) angeordnet ist. Fig. 13 und 14 zeigen den Zusammenbau in Vorderansicht und Draufsicht gemäß Fig. 3 und 7, wobei das Bestimmelement (10) in einem Querschieber (15) angeordnet ist.

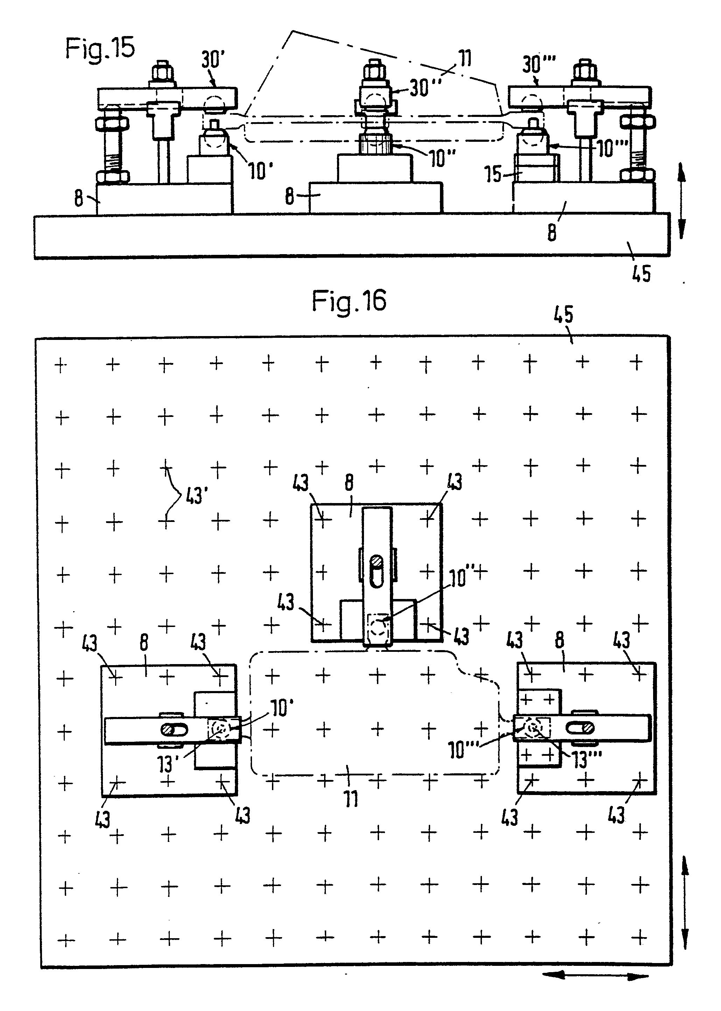

In den Fig. 15 bis 20 sind Anordnungsbeispiele für das Bestimmen und Spannen von unterschiedlichen Werkstücken (11) mit erfindungsgemäßer Anordnung auf einer gemeinsamen Grundplatte (45) wiedergegeben.

Fig. 15 zeigt in der Vorderansicht und Fig. 16 in Draufsicht ein bestimmtes und gespanntes Werkstück (11) unter Verwendung der Anordnungen nach Fig. 9, 11 und 12. In Fig. 15 zeigt der Doppelpfeil die Richtung der ersten Ebene und in Fig. 16 zeigen die Doppelpfeile II und III die Richtungen der zweiten und dritten Ebene. Das Werkstück (11) wird in der ersten Ebene durch drei Bestimmelemente (10'), (10") und (10''') bestimmt. Wie aus Fig. 16 hervorgeht, wird das Werkstück in der zweiten und dritten Ebene mittels der beiden Bestimmelemente (10') und (10''') durch die eingebauten Aufnahmestifte (13') und (13''') bestimmt. Das Bestimmelement (10''') sitzt zum Ausgleich von Abstandsungenauigkeiten der Aufnahmebohrungen des Werkstücks (11) in einem Längsschieber (15). Mit den den Bestimmelementen entsprechend zugeordneten gegenüberliegenden Spannelementen (30'), (30") und (30''') wird das Werkstück (11) in der durch die Bestimmelemente (10'), (10") und (10''') bestimmten Lage gespannt.

Aus der Draufsicht der Fig. 16 geht weiter hervor, daß die Fußplatten (8) der einzelnen Anordnungen mit Bohrungen (43) versehen sind, die das gleiche Rastermaß wie Bohrungen (43') eines Tisches oder Platte (45) aufweisen. Auf diese Weise kann die Anordnung vergleichsweise einfach am Tisch oder Platte (45) befestigt, z. B. angeschraubt werden.

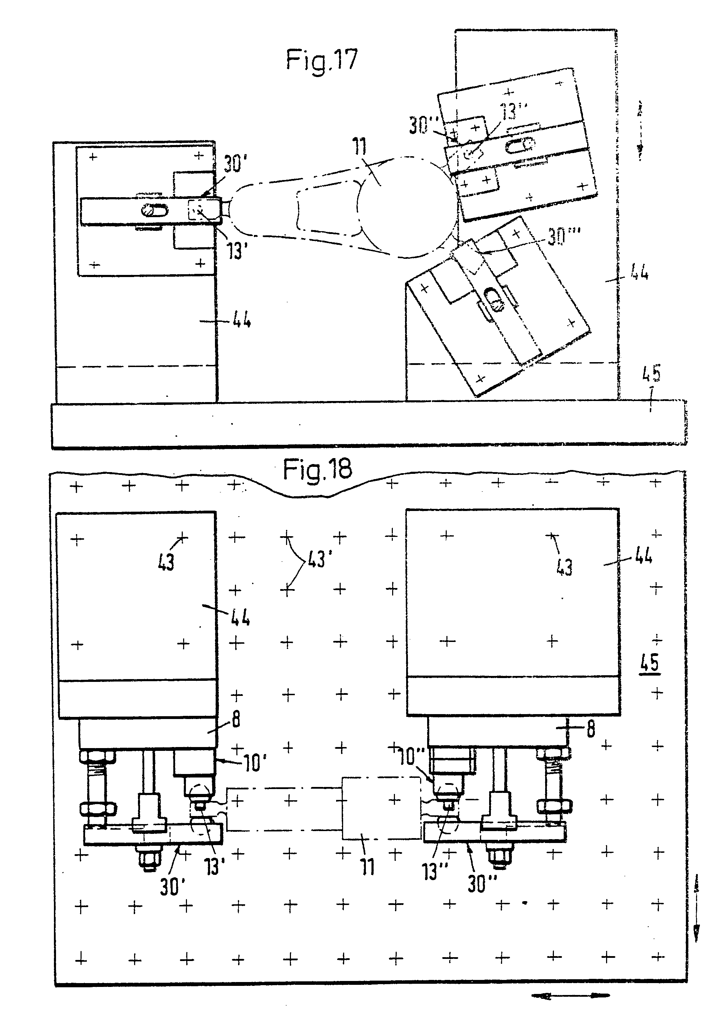

Fig. 17 und 18 zeigen ein unter Verwendung von Zwischenstücken, beispielsweise Winkel (44) bestimmtes und gespanntes Werkstück (11). Hierbei sind die Bestimm- und Spannelemente auf Winkel aufgebaut, wenn die Bearbeitung des Werkstücks (11) es erfordert.

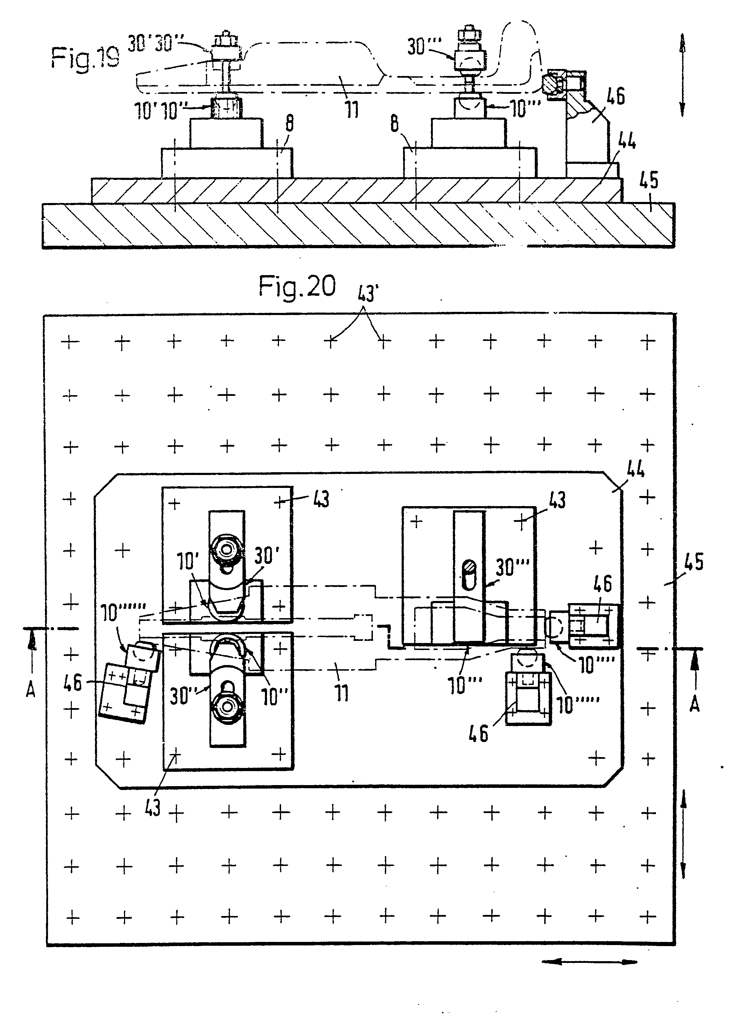

Die Fig. 19 und 20 zeigen die Anwendung der erfindungsgemäßen Anordnung zum Bestimmen und Spannen eines Werkstückes (11) in der ersten Ebene mit den Bestimmelementen (10'), (10") und (10'''), Zum Bestimmen in der zweiten und dritten Ebene sind Bestimmelemente (10''''), (10'''''), (10'''''') gemäß Fig. 1 vorgesehen, die in Aufnahmeböcke (46) eingebaut sind.

### Patentansprüche

1. Anordnung zum Bestimmen von Werkstücken zu deren Bearbeitung, bestehend für die erste Ebene aus drei Bestimmelementen, deren Berührungskörper je eine sphärische Abstützfläche aufweisen und innerhalb eines begrenzten Winkelbereichs allseits schwenkbar sind, dadurch gekennzeichnet, daß die Berührungskörper abgeflachte, in Kugelpfannen (3) beweglich gelagerte Kugeln (1) sind, deren Berührungsflächen zur Anlage am Werkstück (11) eben sind.

2. Anordnung nach Anspruch 1, dadurch gekennzeichnet, daß zum Bestimmen des Werkstücks (11) in der zweiten und/oder dritten Ebene ebenfalls Bestimmelemente (10) verwendet werden, die abgeflachte Kugeln (1) aufweisen, die in Kugelpfannen (3) beweglich gelagert sind, und daß die Berührungsflächen der Elemente zur Anlage am Werkstück (11) eben sind.

3. Anordnung nach Anspruch 1, dadurch gekennzeichnet, daß zum Bestimmen des Werkstückes (11) in der zweiten oder dritten Ebene in einem oder zwei Bestimmelementen (10) ein Aufnahmestift (13) oder ein Schaft einer Aufnahmeschraube (16) enthalten ist, der in eine Bohrung (14) des Werkstückes (11) eingreift, und daß im Falle zweier Bestimmelemente (10) mit je einem Aufnahmestift (13) oder einem Schaft einer Aufnahmeschraube (16) eines dieser beiden Bestimmelemente (10) zum Ausgleich von Abstandsungenauigkeiten der beiden Bohrungen (14) in einem Schieber (15) gelagert ist.

4. Anordnung nach Anspruch 1 oder 2 in Verbindung mit einer Anordnung zum Spannen, dadurch gekennzeichnet, daß zum Spannen des Werkstücks (11) Spannelemente (30) verwendet werden, die abgeflachte, kugelförmige Elemente (17, 31) enthalten, die in Kugelpfannen (33) beweglich gelagert sind.

5. Anordnung nach Anspruch 3 in Verbindung mit einer Anordnung zum Spannen, dadurch gekennzeichnet, daß beim Bestimmen des Werkstücks (11) durch den Schaft der Aufnahmeschraube (16) das Spannen des Werkstücks (11) durch den Schraubenkopf (17) der Aufnahmeschraube (16) bewirkt wird, wobei dessen Unterseite kugelförmig ausgebildet ist und in einer Kugelpfanne (18) sitzt, die eben am Werkstück (11) anliegt.

6. Anordnung nach einem der Ansprüche 1 bis 4 in Verbindung mit einer Anordnung zum Stützen und Spannen, dadurch gekennzeichnet, daß zusätzlich höhenverstellbare Stütz- und Spannelemente (23, 17) vorgesehen sind, die abgeflachte Kugeln (1) enthalten, die in Kugelpfannen (3, 18) beweglich gelagert sind, und daß die Berührungsflächen der Elemente zur Anlage am Werkstück (11) eben sind.

## Claims

1. An arrangement for positioning workpieces to be machined, consisting for the first plane of three positioning members having contacting bodies, each of which has a spherical engaging surface and which are pivotally movable in all directions within a limited angular range, characterized in that the contacting bodies consist of flattened spherical members (1) having flat surfaces for engaging the workpiece (11).

2. An arrangement according to claim 1, characterized in that additional positioning members (10) are used to position the workpiece (11) in the second and/or third plane and comprise flattened spherical members (1), which are movably mounted in spherical seats (3) and have flat surfaces for engaging the workpiece (11).

3. An arrangement according to claim 1, characterized in that for positioning the workpiece (11) in the second or third plane one or two positioning elements (10) comprise a locating pin (13) or a shaft of a locating screw (16), which enters a bore (14) of the workpiece (11), and that in case of two positioning elements (10) provided each with a locating pin (13) or a shaft of a locating screw (16) one of said two positioning elements (10) is mounted in a slider (15) for a compensation of inaccuracies in the distance between the two bores (14).

4. An arrangement according to claim 1 or 2 in conjunction with an arrangement for clamping, characterized in that clamping members (30) are used to clamp the workpiece (11) and comprise flattened spherical members (17, 31), which are movably mounted in spherical seats (33).

5. An arrangement according to claim 2 in conjunction with an arrangement for clamping, characterized in that the shaft of the locating screw (16) is used to position the workpiece (11) and the head (17) of the locating screw (16) is used to clamp the workpiece (11) and has a spherical undersurface, which fits a spherical seat member (18), which has a flat surface for engaging the workpiece (11).

6. An arrangement according to any of claims 1 to 4 in conjunction with an arrangement for supporting and clamping, characterized in that additional supporting and clamping members (23, 17) are provided, which are adjustable in height and comprise flattened spherical elements (1), which are movably mounted in spherical seats (3, 18), and that the members have flat surfaces for engaging the workpiece (11).

## Revendications

1. Dispositif pour mettre des pièces en position en vue de leur usinage, constitué pour le premier plan par trois éléments de mise en place dont les éléments de contact présentent chacun une surface d'appui sphérique et sont pivotables dans tous les sens, à l'intérieur d'un domaine angulaire limité, caractérisé en ce que les éléments de contact consistent en des sphères aplaties (1) logées de manière mobile dans des coussinets sphériques (3) dont les surfaces de contact avec la pièce (11) sont planes.

2. Dispositif suivant la revendication 1 caractérisé en ce que, pour mettre la pièce (11) en position dans les deuxième et/ou troisième plans, on utilise également des éléments (10) de mise en place, qui présentent des sphères (1) aplaties, montées de manière mobile dans des coussinets sphériques, et en ce que les surfaces de contact des éléments destinées à porter contre la pièce (11) sont planes.

3. Dispositif suivant la revendication 1 caractérisé en ce que, pour mettre la pièce (11) en position dans le deuxième ou le troisième plan, un ou deux éléments de mise en place (10) comportent une goupille (13) de position ou une tige d'une vis de position (16) qui s'engage dans un alésage (14) de la pièce (11) et en ce que, dans le cas de deux éléments de mise en position (10) dont chacun comporte une goupille (13) ou une tige d'une vis de position (16), l'un de ces deux éléments de mise en position (10) est logé dans un coulisseau (15), en vue de compenser les irrégularités d'écartement des deux alésages (14).

4. Dispositif suivant la revendication 1 ou 2, en combinaison avec un dispositif de serrage, caractérisé en ce que pour serrer la pièce (11) on utilise des éléments de serrage (30) qui comprennent des éléments (17, 31) en forme de sphères aplaties, montées de manière mobile dans des coussinets sphériques (33).

5. Dispositif suivant la revendication 3, en combinaison avec un dispositif de serrage, caractérisé en ce que, lors de la mise en position de la pièce (11) par la tige de la vis (16) de position, le serrage de la pièce (11) est effectué par la tête (17) de la vis (16) de position, la face inférieure de la tête ayant une forme sphérique et étant logée dans un coussinet sphérique (18) qui porte à plat contre la pièce (11).

6. Dispositif suivant l'une des revendications 1 à 4, en combinaison avec un dispositif d'appui et de serrage, caractérisé en ce qu'il est prévu des éléments (23, 17) supplémentaires d'appui et de serrage, qui sont réglables en hauteur et qui comprennent des sphères (1) aplaties montées de manière mobile dans des coussinets sphériques (3, 18) et en ce que les surfaces de contact des éléments avec la pièce (11) sont planes.

# Fig.1

# Fig.2

# Fig.3

# Fig.4

1

# Fig.5

# Fig.6

Fig.7

## Fig:8

## Fig.9

## Fig.10

## Fig.11

5

## Fig.12

## Fig.13

## Fig.14

Fig.15

Fig.16

Fig.17

Fig.18

8

Fig.19

Fig.20